# EUROPEAN PATENT APPLICATION

(11) **EP 3 485 741 A1**
(43) Date of publication of application: **22.05.2019**
(21) Application number: 18205405.6
(22) Date of filing: 09.11.2018
(51) Int. Cl.: A23L 19/00

(54) **FUNCTIONAL FRUIT OR FRUIT-VEGETABLE PRODUCT AND THE METHOD OF ITS MANUFACTURING**

(30) Priority: 21.11.2017 PL 42352317
(71) Applicant: Pure Ice Sp. z o.o., 05-850 Ozarow Mazowiecki (PL)
(72) Inventor: Sadowska, Anna, 05-500 Piaseczno (PL); Swiderski, Franciszek, 02-886 Warszawa (PL); Rakowska, Rita, 42-208 Czestochowa (PL)
(74) Representative: AOMB Polska Sp. z.o.o.

(57) **Abstract**

The invention relates to a functional high-protein fruit or fruit-vegetable cream in non-freezing or partially frozen form fixed by freezing, comprising carbohydrates, proteins and fiber, **characterized in that** it is foamed with gas and contains fruit and vegetables preserves in an amount of from 50 to 95% by weight, albumin, especially of chicken egg, in an amount of from 1 to 10wt.% based on albumin dry mass, fiber in an amount of from 2 to 12wt.%, wherein the dry mass of the ingredients constituting the cream composition is from 30 to 70wt.% of cream, preferably from 36 to 70wt.% of cream.

The invention also includes a method of manufacturing such a cream.

## Description

The invention relates to functional high-protein fruit or fruit-vegetable creams in unfrozen or partially frozen form to be fixed by freezing, suitable for consumption without thawing, containing a set of energy, nutrient, textogenic and flavouring ingredients in the form of carbohydrates mainly derived from fruits and vegetables ensuring normal blood glucose, wholesome proteins, fiber derived from fruit and vegetable intermediates used, and fructans in the form of inulin and/or oligofructose with prebiotic properties.

Compositions containing some of the recipe ingredients similar to the compositions of the present invention are known in the prior art. These are functional food products containing for example prebiotic substance, inulin, vegetables, fruits and protein - albumin, however, they differ significantly from the present invention both in the method of manufacturing, functionality and intended use.

A patent document WO2013167980A1 (D1) discloses a composition comprising fruit (fruit purées) and vegetable (vegetable purée) purées added individually or their compositions and various types of glucose and fructose sources, such as dextrose and its polymers, fructose, syrups from various sources and at least one milk substitute. A suitable composition of the aforementioned carbohydrate ingredients makes it possible to obtain purées with a varied weight ratio of glucose to fructose ranging from 0.5:1 to 5:1. The composition according to D1 is used in functional nutritional products for athletes to increase strength. The present invention differs from the composition according to the invention described in document D1 in terms of composition, functional and performance characteristics as well as intended use. Furthermore, the present invention does not include dairy products or so-called substitutes for dairy products, as in document WO2013167980A1, and contains only fruit and vegetable purées. The product disclosed in D1, in contrast to the present invention, contains added sweeteners, such as: glucose, fructose, sugar syrups, maltodextrins. Document D1 does not say anything about the use of egg albumin, which in the present invention has a triple function, i.e. causes foaming of creams, increasing of the dry sugar-free mass content and increases their nutritional value. A completely different technology was used to manufacture the composition of the present invention than the composition disclosed in document D1. Due to the use of appropriately high concentration (extract), the composition of high viscosity fruit, vegetable ingredients, egg albumin, fructans (inulin) and intensive mixing resulted in an appropriately foamed product that does not freeze or freezes at a minimum temperature of -18°C depending on the dry mass content. This allows it to be consumed immediately after being removed from the freezer without the need for prior thawing, which is necessary for the consumption of purées (purée) fixed using the same method. In addition, the possibility of optionally enriching the composition of the present invention with fructans (inulin, oligofructose) increases the content of fiber in the product and increases its health prebiotic - benefits.

Patent document US20080050497A1 (D2) relates to the composition and method of obtaining a food product containing a coagulated protein (e.g. egg albumin) and a hydrating stabilizing structure selected from the group of carbohydrates containing e.g. inulin. The composition according to the document D2 further comprises the addition of a flavouring substance. The preparation method includes mixing, pasteurisation, homogenization, packaging filling and cooling. This product, although it may contain egg albumin and inulin in its composition, is substantially different from the composition of the present invention both in terms of composition, manufacturing method and functional characteristics. The invention disclosed in D2 does not contain fruit products, is not foamed, does not retain the non-freezing consistency or the minimally freezing fruit cream. This composition is not fixed by freezing, only pasteurisation, it contains coagulated protein (albumin), while the protein contained in the composition of the present invention is in its native form.

Therefore, the aim of the invention is to obtain functional high-protein fruit and fruit-vegetable creams with a long shelf life of a high nutritional value, sensory quality and high availability, i.e. with the possibility of their immediate consumption without the need for thawing after the use of freezing.

The essence of the invention is to obtain a unique, homogeneous, partially foamed texture of a fruit or fruit-vegetable cream with the proper sweet taste, fixed by freezing with a non-freezing consistency or partially freezing paste not requiring thawing before consumption, which is achieved by using a suitable composition with a dry mass content of 30-70 wt.%, more preferably 36-70 wt.%, natural fruit and vegetable ingredients in the form of concentrated fruit or fruit-vegetable purées and concentrated juices giving creams a suitable viscosity to retain the introduced air bubbles or inert gases resulting from intense mixing of the fruit or fruit-vegetable contest with egg albumin, which acts as a natural foaming agent. In addition, the applied albumin increases the dry mass content of creams without increasing their sweetness and significantly increases their nutritional value, and the applied fructans increase the content of fiber with prebiotic properties.

Functional high-protein fruit or fruit-vegetable cream in non-freezing or partially frozen form fixed by freezing, comprising carbohydrates, proteins and fiber, according to the invention is characterized in that it is foamed with gas and contains fruit and vegetables preserves in an amount of from 50 to 95% by weight, albumin, especially of chicken egg, in an amount of from 1 to 10wt.% based on albumin dry mass, fiber in an amount of from 2 to 12wt.%, wherein the dry mass of the ingredients constituting the cream composition is from 30 to 70 wt.% of cream, preferably from 36 to 70wt.% of cream.

Preferably, the cream further comprises honey in an amount of from 1 to 30wt.%.

Preferably, the sugars contained in the composition originate exclusively from fruit, vegetables and/or added honey present in the cream.

Particularly preferably, the cream does not contain added sucrose.

Preferably, the cream is foamed with air or an inert gas, in particular selected from the group consisting of: nitrogen, carbon dioxide and argon.

Preferably, the cream is a non-freezing or partially freezing product suitable for direct consumption without the need for thawing.

Preferably, the cream in partially frozen form has visible ice crystals.

The invention also includes a method of manufacturing the cream as defined above. According to the invention, the method comprises the steps of:
a) intensive mixing of the cream ingredients in the amounts provided for the prescription formula indicated above with simultaneous gas foaming to obtain from 1.5 to 2-fold volume increase in 1 to 20 minutes, depending on the size of the sample,
b) dispensing foamy cream mass into the packaging;
c) freezing to obtain a temperature inside the product at the level of -15°C (minus 15 degrees Celsius) or below,
d) optionally storing the cream under typical freezing conditions, in particular at a temperature of from -18°C to -22°C (from minus 18 to minus 22 degrees Celsius).

Preferably, in step a) of the process according to the invention, air or an inert gas is used as a foaming gas, in particular selected from the group consisting of: nitrogen, carbon dioxide and argon.

Functional high-protein fruit and fruit-vegetable creams with a long shelf life are a product of general consumption, but they can be especially recommended for people who are in the state of exhaustion, physical and mental exhaustion of the body, for physically active people, the elderly as well as children and adolescents. Cream versions recommended especially for children can contain honey enriching the product with additional bioactive ingredients.

A functional high-protein product in the form of fruit and fruit-vegetable cream is easily absorbed, mono- and oligosaccharides derived from fruits and vegetables, from concentrated fruit juices, fruit purées or possibly from honey added allow to obtain the product without the addition of traditionally used sucrose, with high sensory qualities, desirable high nutritional value, as intended. Functional creams are characterized by high nutritional value, because they have high content of wholesome protein in the form of egg albumin in their composition and high total content of fiber and soluble fiber derived from fruits and vegetables and fructans in the form of inulin or oligofructose, having valuable health properties including prebiotic ones stimulating development of prebiotic microflora in the human digestive tract.

Functional high-protein fruit and fruit-vegetable creams do not contain additional substances marked with the symbol "E" and do not contain sucrose. They are based on natural components such as: various fruit and fruit-vegetable preserves in the form of purées and juices of different, usually significantly increased dry mass. The egg albumin used has a dual function: enriching the product with protein valuable from the nutritional point in high biological value (reference protein) and text-forming, ensuring adequate, proper foaming of the creams.

Foaming the creams and a correspondingly high content of dry mass and total extract generally make that the created texture of the cream prevents or hinders the freezing of the contained free and bound water preserving the texture of the cream in the form of slightly foamed thick paste or with a correspondingly lower dry mass/ lower total extract in the form of partially frozen cream with visible ice crystals quickly becoming liquid at room temperature. Created ice crystals give the creams additional features that make the product more attractive.

Functional high-protein fruit and fruit-vegetable creams do not contain added sucrose and the sweet taste and cream extracts give the sugar naturally occurring in the used preserves, such as not concentrated and concentrated juices and purées.

For fruit and fruit-vegetable creams for children, honey was added, which enriches them with bioactive ingredients and at the same time increases the cream extract.

The summery of the invention is presented in the following embodiments:

### Example 1

**Tab. 1. "Functional high-protein fruit cream"**

| **Ingredients** | **%** |
|---|---|
| concentrated (twice) raspberry purée | 59 |
| concentrated apple juice (70%) | 29 |
| egg albumin | 9 |
| inulin | 3 |

Example 2:

**Tab. 2. Cream with concentrated and non-concentrated preserves.**

| **Ingredients** | **%** |
|---|---|
| banana puree | 35 |
| concentrated apple juice (70%) | 30 |
| apricot purée | 24 |
| egg albumin | 8 |
| concentrated passion fruit juice (50%) | 3 |

### Example 3:

**Tab. 3. Cream with honey**

| **Ingredient** | **%** |
|---|---|
| pumpkin purée | 40 |
| concentrated apple juice (70%) | 25 |
| banana purée | 14 |
| egg albumin | 8 |
| concentrated passion fruit juice (50%) | 5 |
| honey | 5 |
| inulin | 3 |

The fruit and fruit-vegetable components used, such as purées and juices, must be adequately prepared, i.e. to provide them with the required microbiological purity. Purées after crushing fruit should be heat-treated and concentrated in an evaporator (at reduced pressure). After heat treatment, they should be packed aseptically or frozen. Concentrated juices, depending on the degree of their concentration and the content of the extract therein, should be stored under refrigeration conditions or in a frozen state. The other ingredients used should meet the microbiological requirements for general-purpose food products.

The method for preparing a cream according to the invention is as follows:
Prepared ingredients in the amounts provided for the recipe composition are subjected to intensive mixing in a device providing adequate foaming with gas, i.e. from 1.5 to 2-fold volume increase over a few to several minutes depending on the size of the sample. The foaming process can be achieved using air or more preferably inert gases such as nitrogen, carbon dioxide, argon. The resulting fruit or fruit-vegetable cream mass is dispensed into appropriate unit packages and then quickly frozen at low temperatures to obtain a temperature inside the product at the level of -15°C (minus 15 degrees Celsius) or below. After freezing, the product is stored at typical freezing temperatures (typically from -18°C to -22°C). The product is ready to be consumed immediately after taking it out of the freezer, does not require thawing, can be stored at room temperature before consumption, to obtain a correspondingly higher consumption temperature at the discretion of the consumer.

## Claims

1. Functional high-protein fruit or fruit-vegetable cream in non-freezing or partially frozen form fixed by freezing, comprising carbohydrates, proteins and fiber, **characterized in that** it is foamed with gas and contains fruit and vegetables preserves in an amount of from 50 to 95% by weight, albumin, especially of chicken egg, in an amount of from 1 to 10wt.% based on albumin dry mass, fiber in an amount of from 2 to 12wt.%, wherein the dry mass of the ingredients constituting the cream composition is from 30 to 70 wt.% of cream, preferably from 36 to 70wt.% of cream.

2. The cream according to claim 1, **characterized in that** it further comprises honey in an amount of from 1 to 30wt.%.

3. The cream according to claim 1 or 2, **characterized in that** the sugars contained in the composition originate exclusively from fruit, vegetables and/or added honey present in the cream.

4. The cream according to claim 3, **characterized in that** it does not contain added sucrose.

5. The cream according to any one of claims 1 to 4, **characterized in that**, is foamed with air or an inert gas, in particular selected from the group consisting of: nitrogen, carbon dioxide and argon.

6. The cream according to any one of claims 1 to 5, **characterized in that**, is a non-freezing or partially freezing product suitable for direct consumption without the need for thawing.

7. The cream according to any one of claims 1 to 6, **characterized in that**, in partially frozen form has visible ice crystals.

8. A method of manufacturing the cream according to any one of preceding claims 1 to 7, **characterized in that** it comprises the steps of:
a) intensive mixing of the cream ingredients in the amounts provided for the recipe composition indicated in the claims from 1 to 5 with simultaneous gas foaming to obtain from 1.5 to 2-fold volume increase in 1 to 20 minutes, depending on the size of the sample,
b) dispensing foamy cream mass into the packaging;
c) freezing to obtain a temperature inside the product at the level of -15°C or below,
d) optionally storing the cream under typical freezing conditions, in particular at a temperature of from -18°C to -22°C.

9. The method according to claim 8, **characterized in that** in step a) air or an inert gas is used as a foaming gas, in particular selected from the group consisting of: nitrogen, carbon dioxide and argon.
